# EUROPÄISCHE PATENTSCHRIFT

(11) **EP 3 075 292 B1**
(45) Veröffentlichungstag und Bekanntmachung des Hinweises auf die Patenterteilung: **29.11.2017**
(21) Anmeldenummer: 16166517.9
(22) Anmeldetag: 02.08.2013
(51) Int. Cl.: A47J 36/10, A47J 43/046, A47J 43/07, A47J 43/08, B01F 13/04, B01F 15/00

(54) **ELEKTRISCH BETRIEBENE KÜCHENMASCHINE**
KITCHEN APPLIANCE OPERATED BY ELECTRICITY
ROBOT MENAGER ELECTRIQUE

(30) Priorität: 16.08.2012 DE 102012107518; 23.07.2013 DE 102013012192
(43) Veröffentlichungstag der Anmeldung: 05.10.2016
(62) Teilanmeldung aus: 13744580.5
(73) Patentinhaber: Vorwerk & Co. Interholding GmbH, 42275 Wuppertal (DE)
(72) Erfinder: Caldewey, Uwe, 44229 Dortmund (DE)
(74) Vertreter: Müller, Enno

(56) Entgegenhaltungen:
- DE-A1-102010 017 719
- DE-A1-102011 051 149

## Beschreibung

Die Erfindung betrifft eine elektrisch betriebene Küchenmaschine mit einem Rührgefäß, einem elektromotorisch betriebenen Rührwerk in dem Rührgefäß und einem Deckel für das Rührgefäß, wobei der Deckel aus einem Verriegelungszustand Offen heraus bevorzugt elektromotorisch verriegelbar ist.

Küchenmaschinen der in Rede stehenden Art sind bekannt. Diese dienen insbesondere im Haushaltsbereich zur Bearbeitung von Nahrungsmitteln, weiter bevorzugt zur Zubereitung von Speisen. Diesbezüglich wird beispielsweise auf die DE 102010037892 A1 verwiesen. Die dort beschriebene Küchenmaschine weist ein aus einem Maschinengehäuse bevorzugt herausnehmbares Rührgefäß auf. Dieses trägt bevorzugt im Bodenbereich ein Rührwerk, welches insbesondere in Zuordnungsstellung des Rührgefäßes in der Küchenmaschine über einen küchenmaschinenseitigen Elektromotor antreibbar ist. Weiter insbesondere im Betrieb der Küchenmaschine, so bevorzugt im Betrieb des rührgefäßseitigen Rührwerks, weiter gegebenenfalls im Betrieb einer weiter bevorzugt vorgesehenen Aufheizeinrichtung für das Rührgefäß, ist das Rührgefäß von einem zuordbaren Deckel übergriffen. Dieser Deckel ist weiter bevorzugt elektromotorisch an dem Rührgefäß und/oder an der Küchenmaschine verriegelbar, um so ein Abheben oder Abnehmen des Deckels insbesondere im Rührwerkbetrieb zu verhindern. Zur Deckelverriegelung sind in der vorbezeichneten Literatur elektromotorisch antreibbare Verriegelungsteile vorgesehen, welche in der Verriegelungsstellung den Deckel in der auf dem Rührgefäß aufgesetzten Stellung übergreifen, hierbei weiter bevorzugt zugleich einen Gefäßrand erfassend. Bekannt ist diesbezüglich weiter sowohl den mit dem Deckel zusammenwirkenden Gefäßrand als auch den mit dem Gefäßrand zusammenwirkenden Bereich des Deckels im Grundriss kreisrund auszugestalten, womit ein in Umfangsrichtung bevorzugt ungerichtetes Auflegen des Deckels auf das Rührgefäß ermöglicht ist.

Weiter ist zum Stand der Technik auf die DE 10 2011 051149 A1 und die DE 10 2010 017 719 A1 zu verweisen.

Im Hinblick auf den bekannten Stand der Technik stellt sich der Erfindung die Aufgabe, eine Küchenmaschine der in Rede stehenden Art insbesondere hinsichtlich der Verriegelung weiter verbessert auszugestalten.

Diese Aufgabe ist bei einer Küchenmaschine gelöst, bei welcher darauf abgestellt ist, dass die Küchenmaschine so eingerichtet ist, dass die Verriegelung in einem bestimmten Zeitraum erfolgt sein muss, wozu Sensoren vorgesehen sind, welche die erfolgte Verriegelung erfassen, und anderenfalls eine Fehlermeldung erfolgt und/oder eine Zurücksetzung der Verriegelung in den Zustand Offen.

Zufolge dieser Ausgestaltung ist eine günstige Verriegelungsüberwachung gegeben. Wird über den oder die Sensoren innerhalb eines bestimmten Zeitraums beziehungsweise innerhalb einer Zeitspanne insbesondere ab Starten des Verriegelungsvorganges nicht der ordnungsgemäße Verriegelungszustand gemeldet, so führt dies zu einer Konsequenz, die weiter bevorzugt die ordnungsgemäße Inbetriebnahme der Küchenmaschine, insbesondere die Inbetriebnahme des Rührwerks und/oder weiterer Komponenten, beispielsweise einer Heizung, nicht zulässt.

Die Sensoren sind hierbei in bevorzugter Ausgestaltung Berührungssensoren, weiter bevorzugt berührungslos arbeitende Sensoren, wie beispielsweise Näherungssensoren oder in Form von Lichtschranken. Diese Sensoren erfassen bevorzugt zumindest einen Abschnitt des insbesondere mit dem Deckel zusammenwirkenden Verriegelungsteils, welches in der ordnungsgemäßen Verriegelungsstellung eine vorbestimmte Position eingenommen haben muss.

Erfasst der beziehungsweise erfassen die Sensoren den ordnungsgemäßen Verriegelungszustand, so wird ein entsprechendes Signal generiert, was insbesondere die Freigabe der weiteren Maschinenfunktionen auslöst. Wird innerhalb des vorgegebenen Zeitraumes der ordnungsgemäße Verriegelungszustand nicht erfasst, generieren die Sensoren entsprechend in dem vorgegebenen Zeitraum kein Signal oder ein vom Verriegelungs-Signal unterschiedliches Signal, so führt dies in einer bevorzugten Ausgestaltung zu einer Fehlermeldung. Diese Fehlermeldung wird bevorzugt dem Benutzer angezeigt, so beispielsweise durch eine entsprechend vorgesehene Warnleuchte oder in einem auch weitere Funktionen der Küchenmaschine im Betrieb derselben anzeigenden Display. Auch ist diesbezüglich eine akustische Fehlermeldung möglich.

Alternativ oder auch zusätzlich hierzu wird die Verriegelung in den Zustand Offen zurückgesetzt. Entsprechend wird das oder werden die Verriegelungsteile bei in dem vorgegebenen Zeitraum nicht erfasster Verriegelungs-Endstellung selbsttätig in die Grundstellung zurück verlagert, d.h. in die, den Deckel vollständig freigebende Stellung. Dies ist bevorzugt erreicht zufolge Drehrichtungsumkehr des bevorzugt das oder die Verriegelungsteile antreibenden Elektromotors.

Weiter ist bevorzugt:
- Der die Verriegelung erbringende Elektromotor weist eine Abgabeleistung von 1 bis 10 Watt auf;
- Der Elektromotor wirkt mittels eines Untersetzungsgetriebes mit einer Unersetzung größer 50:1 auf ein Verriegelungsteil ein;
- Der Elektromotor ist ein Gleichstrommotor.

Hiermit ist eine herstellungsmäßig als auch nutzermäßig günstige, weiter insbesondere kostengünstige Ausgestaltung zur Verriegelung des Deckels an dem Rührgefäß und/oder an dem Gehäuse der Küchenmaschine erreichbar. Die Betätigung der Verriegelungsmechanik, insbesondere des einen oder der mehreren Verriegelungsteile erfolgt bevorzugt über einen sowohl leistungsmäßig kleinen als auch weiter bevorzugt hieraus resultierend in der Bauform kleinen Elektromotor. Entsprechend ist hierdurch auch der zur Anordnung des Elektromotors in der Küchenmaschine nötige Bauraum klein gehalten. Bevorzugt wird hierbei ein Elektromotor, der eine Abgabeleistung von 1 bis 10 Watt aufweist, weiter bevorzugt 1 bis 5 Watt.

Der Elektromotor treibt weiter bevorzugt über ein Untersetzungsgetriebe das Verriegelungsteil an beziehungsweise wirkt auf dieses zur Verlagerung insbesondere aus einer Deckelfreigabestellung in die Deckelverriegelungsstellung und bevorzugt auch zurück ein. Zufolge der bevorzugten relativ hohen Untersetzung von bevorzugt mehr als 50:1 bis hin zu 200:1 kann auch ein vergleichsweise kleiner Elektromotor mit einer Abgabeleistung von bevorzugt 1 bis 10 Watt ein relativ hohes Verriegelungsmoment erreichen. Hierbei findet weiter bevorzugt ein Gleichstrommotor Verwendung.

In einer weiter bevorzugten Ausgestaltung ist vorgesehen, dass der Verriegelungsbetrieb zumindest teilweise im Überlastbetrieb erfolgt. Hierdurch sind auch mit vergleichsweise kleinen Elektromotor von bevorzugt 1 bis 10 Watt zumindest kurzfristig hohe Leistungen erreichbar. Da der Elektromotor in bevorzugter Ausgestaltung nur kurzzeitig zur Verlagerung des Verriegelungsteils insbesondere aus der Deckelfreigabestellung in die Deckelverriegelungsstellung betrieben wird, ist ein solcher Betrieb im Überlastbereich möglich.

Auch ist bevorzugt, dass der Motorstrom des Elektromotors auswertbar ist. Die Auswertung des Motorstroms lässt eine Bewertung hinsichtlich der Belastung des Elektromotors zu. Die Auswertung und bevorzugt auch eine Überwachung des Motorstroms erfolgt in weiter bevorzugter Ausgestaltung über ein Ansteuermodul für den Elektromotor, weiter bevorzugt über einen Mikrokontroller in der Küchenmaschine. Ein gegenüber dem üblichen Betrieb des Elektromotors hinausgehender Strom-Messwert - unter Berücksichtigung des erlaubten Überlastbetriebs - ist beispielsweise dann erfassbar, wenn das zu verlagernde Verriegelungsteil vor Erreichen der Verriegelungsendstellung gegen einen Widerstand tritt, der Elektromotor jedoch weiterhin das Verriegelungsteil in Richtung auf die Verriegelungsstellung versucht zu verlagern. Eine solche Situation kann beispielsweise dann eintreten, wenn der Deckel nicht ordnungsgemäß auf dem Rührgefäß aufgesetzt ist, weiter beispielsweise im Falle einer Deckelschieflage.

Der in diesem Zusammenhang bevorzugt vorgesehene Mikrokontroller kann einen so über den erhöhten Motorstrom generierten Fehler beispielsweise auf einem Display der Küchenmaschine zur Anzeige bringen.

In weiter bevorzugter Ausgestaltung ist die Drehrichtung des Elektromotors umschaltbar. Diese Drehrichtungsumkehr ist bevorzugt genutzt zur Verlagerung des Verriegelungsteiles aus der Deckelverriegelungsposition in die Deckelfreigabeposition. Die Umschaltung erfolgt bevorzugt über einen, den Elektromotor insgesamt ansteuernden und gegebenenfalls auch überwachenden Mikrokontroller. Bevorzugt wirkt der Elektromotor in beiden Drehrichtungen mittels des Untersetzungsgetriebes auf das Verriegelungsteil ein.

Mittels der Überwachung des Motorstroms ist in bevorzugter Ausgestaltung eine Momentenbegrenzung durchführbar. Wird zufolge Überwachung des Motorstroms eine Überlast detektiert, ist in weiter bevorzugter Ausgestaltung ein Abschalten bei entsprechender Überlast vorgesehen. Entsprechend wirkt bei einer so detektierten Störung insbesondere im Verriegelungsbereich der Elektromotor nicht weiter auf das Verriegelungsteil ein, womit einer möglichen Beschädigung des Verriegelungsteils und/oder des Deckels und/oder weiterer Gerätekomponenten entgegengewirkt ist.

Bevorzugt ist mittels der Überwachung des Motorstroms eine Drehrichtungsumkehr auslösbar. Wird Überlast detektiert, wird entsprechend bevorzugt selbsttätig, weiter bevorzugt gesteuert über den Mikrokontroller, die Drehrichtung des Motors umgeschaltet, um so insbesondere das Verriegelungsteil wieder zurück in die Ursprungsstellung, d.h. die Deckelfreigabestellung zu verlagern.

Bei dem Motor handelt es sich weiter bevorzugt um einen 12-Volt-Gleichstrommotor mit einem bevorzugten Nenndrehmoment von 2,5 bis 4, weiter bevorzugt etwa 3,2 mNm. Das Abschaltmoment entspricht hierbei weiter bevorzugt dem 3-bis 8-Fachen des Nenndrehmoments, so bspw. etwa 20 mNm.

Weiter entspricht bei einem bevorzugten Nennstrom von 300 bis 500, insbesondere etwa 400 mA, der Strom im Verriegelungsvorgang etwa dem 3- bis 8-Fachen des Nennstromes, so bspw. etwa 2 A.

Es wird auch vorgeschlagen, dass die Küchenmaschine so eingerichtet ist, dass bei Vorwahl einer Drehzahl des Rührwerks zunächst und selbsttätig der erste Elektromotor die Deckelverriegelung vornimmt und zeitlich danach der zweite Elektromotor zum Antreiben des Rührwerks freigegeben ist. Zufolge dieser Ausgestaltung ist eine handhabungsgünstige Lösung geschaffen. Der Benutzer legt in vorteilhafter Weise den Deckel lediglich auf das Rührgefäß auf. Eine hiernach bevorzugt vorzusehende Drehzahlvorwahl für das Rührwerk durch den Benutzer, d.h. weiter bevorzugt zufolge einer entsprechenden Verlagerung eines Drehzahl-Schalters oder auch nach entsprechender Eingabe beispielsweise über ein Touchscreen-Display, bewirkt zufolge der vorgeschlagenen Lösung entsprechend zunächst eine selbsttätige, automatische Verriegelung des Deckels an dem Rührgefäß und/oder an der Küchenmaschine.

Hierzu wird die Drehzahl-Vorwahl als solche erfasst, bevorzugt über einen maschinenseitigen Mikrokontroller, der diesen Befehl zunächst umsetzt in einen Ansteuerbefehl für den ersten Elektromotor. Dieser erste Elektromotor wirkt hiernach entsprechend auf ein Verriegelungsteil ein derart, dass dieses in die, den Deckel verriegelnde Stellung verlagert wird.

Bevorzugt erst mit Erreichen der Deckelverriegelungsstellung des Verriegelungsteils, d.h. weiter bevorzugt erst mit Erreichen einer Endstellung des Verriegelungsteiles wird der zweite Elektromotor zum Antreiben des Rührwerkes freigegeben, weiter bevorzugt das Rührwerk hiernach mit der vorgewählten Drehzahl antreibend. Es ist hierdurch eine Vereinfachung der Gerätebedienung gegeben. In bevorzugter Ausgestaltung ist seitens des Benutzers kein gesonderter Handgriff oder eine gesonderte Auslösung zur Deckelverriegelung vorzunehmen.

In weiter bevorzugter Ausgestaltung ist die Freigabe des zweiten Elektromotors zum Antreiben des Rührwerks zeitlich beabstandet zu der Inbetriebnahme des ersten Elektromotors zur Deckelverriegelung. In diesem Zusammenhang ist weiter bevorzugt, diese Zeit vorgegeben, beispielsweise in einem, beide Elektromotoren ansteuerbaren Mikrokontroller hinterlegt.

In einer weiter bevorzugten Ausgestaltung ist vorgesehen, dass nach Ablauf der Zeit, für welche eine bestimmte Drehzahl vorgewählt war und das Rührwerk entsprechend angetrieben wurde, selbsttätig eine Öffnung der Deckelverriegelung erfolgt, wobei die Öffnung nach Ablauf einer vorbestimmten Zeit, beginnend mit dem Stillstand des Rührwerks, erfolgt. Entsprechend ist bevorzugt eine selbsttätige Deckelentriegelung nach einem Abschalten des Rührwerks gegeben. Der Benutzer kann entsprechend bevorzugt nach Stillstand des Rührwerks den Deckel von dem Rührgefäß abheben, ohne hierbei gesondert eine Entriegelung zunächst vornehmen zu müssen. Bevorzugt gilt dies sowohl bei einem beispielsweise programmgesteuerten, über einen vorgegebenen Zeitraum begrenzten Rührwerkbetrieb, wie auch bei einem möglichen manuellen Ein- und Ausschalten des Rührwerks, beispielsweise über einen Drehzahl-Schalter. Hierbei wird insbesondere das Rührwerk beziehungsweise der das Rührwerk antreibende zweite Elektromotor überwacht, so weiter bevorzugt der Motorstrom desselben. Über die Überwachung beispielsweise mittels des Mikrokontrollers ist der Stillstand des Rührwerks feststellbar, welcher Stillstand erst das Öffnen des Deckelverriegelung auslöst beziehungsweise veranlasst. Bevorzugt erfolgt die Öffnung der Deckelverriegelung, d.h. insbesondere die Rückverlagerung zumindest eines Verriegelungsteiles aus der Deckel- Verriegelungsstellung in die Deckel-Freigabestellung nicht unmittelbar nach Stillstand des Rührwerks, sondern bevorzugt zeitlich hierzu beabstandet. Diese Wartezeit ist bevorzugt vorgegeben, weiter bevorzugt beispielsweise in dem die Elektromotoren steuernden und überwachenden Mikrokontroller hinterlegt beziehungsweise diesem zugänglich. Die vorbestimmte Zeit ist hierbei weiter bevorzugt so gewählt, dass beispielsweise eine über das sich drehende Rührwerk aufgebaute Flüssigkeitssäule, die gegebenenfalls unterseitig gegen den Deckel drückt, sich bis zur Deckelfreigabe abbaut. Entsprechend ist so einem Abspringen des Deckels bei noch nicht beruhigter Flüssigkeitssäule, darüber hinaus einem Herausspritzen von beispielsweise Flüssigkeit aus dem Rührgefäß entgegengewirkt.

Die vorbestimmte Zeit ist in bevorzugter Ausgestaltung in Abhängigkeit von der vorgewählten Drehzahl des Rührwerks unterschiedlich. So ist die vorbestimmte Zeit bei hohen Drehzahlen von bevorzugt mehreren 1.000 U/min, beispielsweise 3.000, 8.000 oder 10.000 U/min, länger gewählt als bei Umdrehungszahlen von bis zu 1.000 U/min, beispielsweise 200, 500 oder 800 U/min. Weiter bevorzugt wird die vorbestimmte Zeit anhand der eingestellten Drehzahl des Rührwerks ermittelt, dies insbesondere über den bevorzugt vorgesehenen Mikrokontroller. Hierzu dienen in vorteilhafter Weise bevorzugt in dem Mikrokontroller oder in einem weiteren Speichermedium hinterlegte Vergleichswerte. Bei sehr niedrigen Drehzahlen des Rührwerks ist in einer weiter bevorzugten Ausgestaltung die vorbestimmte Zeit gleich Null bis hin zu einer oder zwei Sekunden, da sich bei diesen niedrigen Drehzahlen bei weiter ordnungsgemäßer Befüllung des Rührgefäßes keine oder keine wesentlich gegen den Deckel wirkende Flüssigkeitssäule aufbaut. Bei vergleichsweise hohen Drehzahlen von beispielsweise mehreren 1.000 U/min ist eine Verzögerungszeit zur Deckelfreigabe von bevorzugt 1 bis 5 Sekunden vorgesehen.

So liegt weiter bevorzugt die Zeit zwischen Rührwerk-Stillstand und Deckelfreigabe bei 100 ms bis hin zu 4 s. Diese ist im Wesentlichen von der voreingestellten Drehzahl bestimmt. Bei einer hohen Drehzahl von bevorzugt mehr als 10.000 U/min liegt diese bei bevorzugt 4 s; bei niedrigen Drehzahlen von bspw. weniger als 300 U/min bei bevorzugt 100 ms. Die Zeitwerte sind bevorzugt in einer internen Tabelle hinterlegt, die weiter so gewählt sind, dass ein Medium im Rührgefäß so weit beruhigt ist, dass dieses bei Öffnen des Deckels nicht über den Gefäßrand hinausschwappt.

Bevorzugt ist die vorbestimmte Verriegelungs-Zeit kleiner als zwei Sekunden, bis hin zu <0,5 Sekunden. Innerhalb dieser Zeitspanne muss der oder müssen die Sensoren die Verriegelungsstellung beziehungsweise die Verriegelungs-Endstellung des einen oder der mehreren Verriegelungsteile melden.

Die vor- und nachstehend angegebenen Bereiche bzw. Wertebereiche oder Mehrfachbereiche schließen hinsichtlich der Offenbarung auch sämtliche Zwischenwerte ein, insbesondere in 1/10- Schritten der jeweiligen Dimension, ggf. also auch dimensionslos, insbesondere 1,01-Fach etc., einerseits zur Eingrenzung der genannten Bereichsgrenzen von unten und/oder oben, alternativ oder ergänzend aber auch im Hinblick auf die Offenbarung eines oder mehrerer singulärer Werte aus dem jeweils angegebenen Bereich.

Nachstehend ist die Erfindung anhand der beigefügten Zeichnung erläutert, die aber lediglich ein Ausführungsbeispiel darstellt. Auf der Zeichnung zeigt:
- Fig. 1: in einer schematischen Seitenansicht eine Küchenmaschine der in Rede stehenden Art mit einem deckelverschlossenen Gargefäß;
- Fig. 2: die Draufsicht hierzu;

- Fig. 3: den Schnitt gemäß der Linie III-III in Fig. 2, die Verriegelungsstellung Offen, d.h. die Deckel-Freigabestellung betreffend;
- Fig. 4: eine Folgedarstellung zu Fig. 3, nach Aufsetzen des Deckels auf einen Gefäßrand;
- Fig. 5: die Deckel-Verriegelungsstellung nach Verlagerung eines Verriegelungsteils;
- Fig. 6: eine der Fig. 5 im Wesentlichen entsprechende Schnittdarstellung, jedoch bei nicht ordnungsgemäß aufgesetztem Deckel und entsprechend Nichterreichen der Verriegelungsstellung des Verriegelungsteils;
- Fig 7: eine schematische Schnittdarstellung eines Endbereiches des Verriegelungsteils mit einem maschinenseitig vorgesehenen Schalter und einem verriegelungsteilseitigen Nocken.

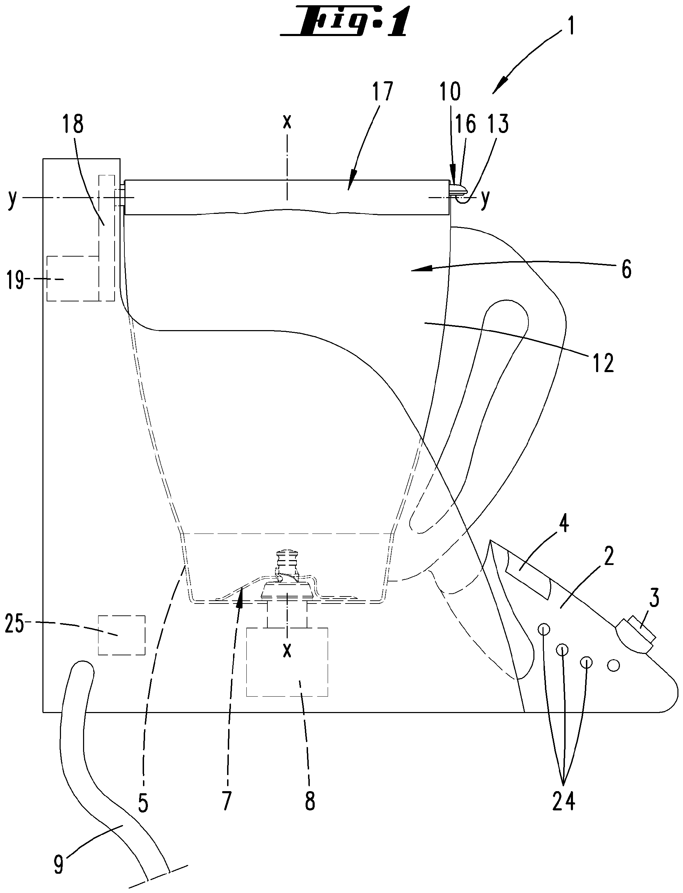

Dargestellt und beschrieben ist zunächst mit Bezug zur Figur 1 eine elektrisch betriebene Küchenmaschine 1.

Diese weist zunächst ein Bedienfeld 2 auf mit bevorzugt einer Mehrzahl von Reglern 3 und/oder Tastern 24 sowie bevorzugt ein Display 4 zum Anzeigen der insbesondere über die Regler 3 und/oder Taster 24 einzustellenden Parametern.

Des Weiteren verfügt die Küchenmaschine 1 über eine Gefäßaufnahme 5.

In diese ist ein Rührgefäß 6 in Form eines Gargefäßes insbesondere im Fußbereich desselben bevorzugt formschlüssig aufnehmbar und halterbar.

Das Gefäß 6 ist bevorzugt im Wesentlichen rotationssymmetrisch ausgebildet, mit einer zentralen Vertikalachse x.

Im Bodenbereich weist das Gefäß 6 bevorzugt ein Rührwerk 7 auf. Dieses ist in der Zuordnungsstellung des Gefäßes 6 in der Gefäßaufnahme 5 formschlüssig gekoppelt mit einem in der Küchenmaschine 1 vorgesehenen Rührwerkantrieb.

Die Elektroversorgung des, den Rührwerkantrieb bildenden Elektromotors 8 sowie einer weiter bevorzugt behälterbodenseitig vorgesehenen Heizung und darüber hinaus auch der elektrischen Steuerung der gesamten Küchenmaschine 1 ist über ein Netzanschlusskabel 9 erreicht.

Das Gefäß 6 ist weiter insbesondere im Betrieb des Rührwerks 7 und/oder der Heizung 8 durch einen Deckel 10 verschlossen. Dieser weist bevorzugt zentral, die Vertikalachse x des Gefäßes 6 aufnehmend, eine Einfüllöffnung 11 auf, dies weiter bevorzugt bei insgesamt im Wesentlichen kreisscheibenförmigem Grundriss des Deckels 10.

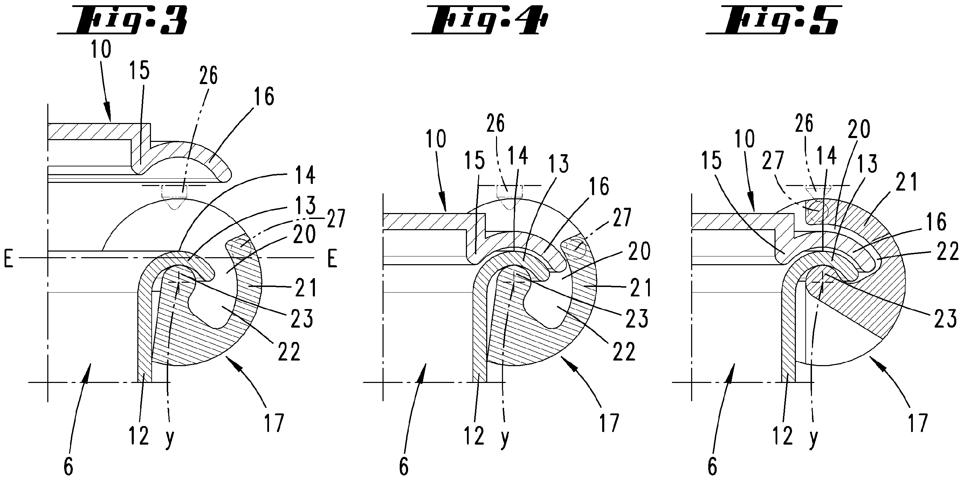

Das Gefäß 6 weist eine vom Bodenbereich sich in Vertikalrichtung nach oben erstreckende Gefäßwandung 12 auf, die gefäßöffnungsseitig in einen nach radial außen abragenden Gefäßrand 13 übergeht. Letzter ist mit Bezug auf einen Vertikalquerschnitt (vgl. Fig. 3) kreislinienabschnittförmig gebildet, weiter bevorzugt halbkreislinienförmig, mit einer nach vertikal oben gerichteten Wölbungsfläche 14.

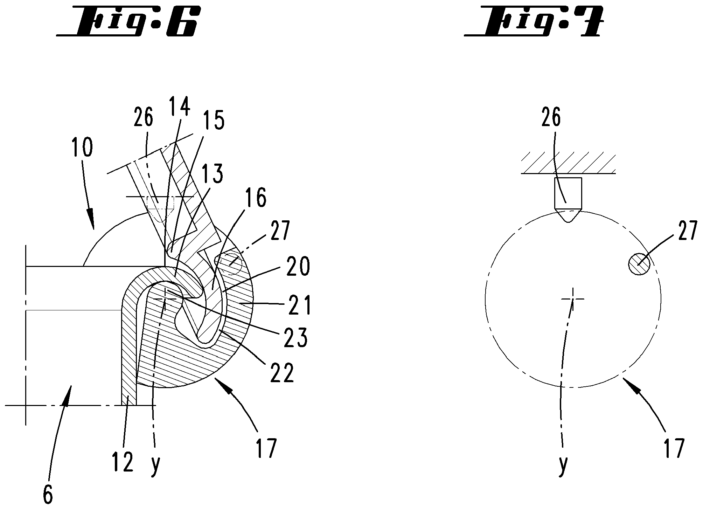

Der Deckel 10 ist unterseitig, d. h. in Zuordnungsstellung dem Gefäßinneren zugewandt, mit einem sich im Wesentlichen koaxial zur Vertikalachse x erstreckenden umlaufenden Kragen 15 versehen. Fußseitig des Kragens 15, entsprechend entlang der in Zuordnungsstellung dem Gefäßinneren zugewandten Kragenrandkante, ist ein nach radial außen sich erstreckender Deckelrand 16 angeformt. Dieser erstreckt sich mit Bezug auf einen Vertikalschnitt gemäß Fig. 6 angepasst an den Gefäßrand 13 kreislinienabschnittförmig, weiter bevorzugt in Zuordnungszustellung des Deckels 10 unter konzentrischem Verlauf zu dem Gefäßrand 13. In der ordnungsgemäßen Zuordnungsstellung stützt sich der Deckel 10 über dessen Deckelrand 16 auf dem Gefäßrand 13 ab (vgl. Fig. 3).

Wenngleich nicht dargestellt, ist an dem Deckel 10 oder im Bereich des Gefäßrandes 13 eine Dichtung vorgesehen, insbesondere zur fluiddichten Anordnung des Deckels 10 auf dem Gefäß 6. In üblicher Weise besteht eine solche Dichtung aus einem Weichkunststoffmaterial, beispielsweise aus einem thermoplastischen Elastomer.

Insbesondere im Betrieb der Küchenmaschine, weiter insbesondere im Rührwerk- und/oder Heizbetrieb ist der auf das Gefäß 6 aufgesetzte Deckel 10 zu verriegeln, da im Betrieb der Küchenmaschine 1 gegebenenfalls hohe Kräfte beispielsweise durch einen Zerkleinerungsprozess mittels des Rührwerks 7 und/oder durch eine Fluiddynamik im Gefäß 6 entstehen können. Hierzu weist die Küchenmaschine 1 mindestens ein Verriegelungsteil 17 auf, welches den Deckel 10 gegen das Gefäß 6 verriegelt. Dieses Verriegelungsteil 17 ist bevorzugt langgestreckt, wellenartig ausgebildet, mit einer zentralen, in Längserstreckung ausgerichteten Achse, welche zugleich eine Drehachse y des Verriegelungsteiles 17 darstellt.

Weiter ist die Anordnung der Drehachse y in der dargestellten Ausführungsform so gewählt, dass diese sich radial außerhalb des Gefäßrandes 13, weiter in vertikaler Überdeckung zu dem Gefäßrand 13 unterhalb desselben erstreckt. Hierbei ist weiter bevorzugt, dass die Drehachse y mit Bezug auf einen Vertikalschnitt gemäß Fig. 3 den Mittelpunkt des kreislinienabschnittförmigen Gefäßrandes 13 schneidet.

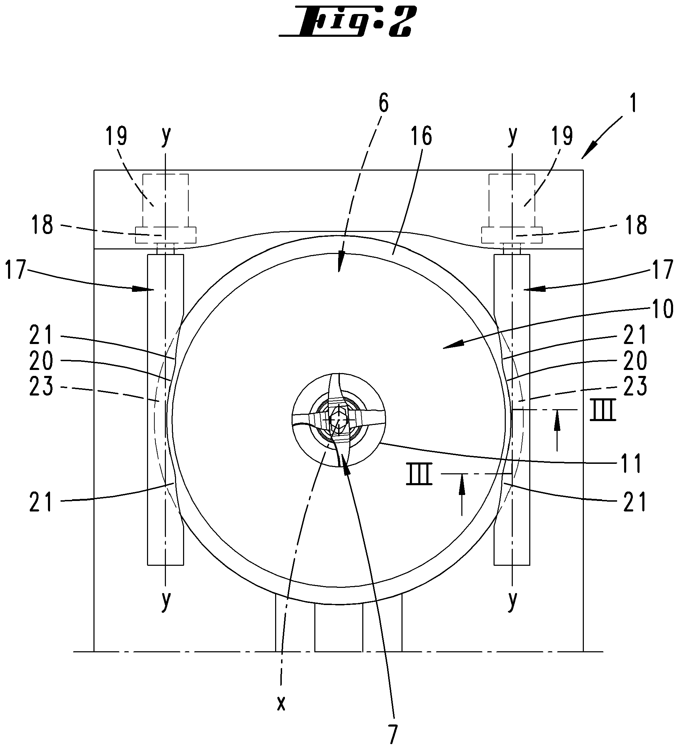

Das insgesamt langgestreckt zylinderförmige Verriegelungsteil 17 ist zufolge der vorbeschriebenen Anordnung und Ausrichtung der Drehachse y derart angeordnet, dass dieses mit Bezug auf eine Draufsicht (vgl. Fig. 2) den Gargefäßrand 13 sowie in Zuordnungsstellung den Deckelrand 16 sekantenartig schneidet, wobei in dem dargestellten Ausführungsbeispiel die axiale Länge des Verriegelungsteiles 17 so gewählt ist, dass beide Endbereiche desselben mit Bezug auf eine Draufsicht frei über den sekantenartig, partiell umfassten Randbereich hinausragen.

Ein Ende des Verriegelungsteiles 17 ist unter Zwischenschaltung eines Untersetzungsgetriebes 18 mit einem in der Küchenmaschine 1 angeordneten Elektromotor 19 verbunden. Wie dargestellt, kann die Anordnung des Elektromotors 19 so gewählt sein, dass dessen Drehachse in einer Vertikalprojektion mit der Drehachse y des Verriegelungsteiles 17 zusammenfällt. Der Elektromotor 19 weist bevorzugt eine Abgabeleistung von 5 Watt auf, ist darüber hinaus bevorzugt ein Gleichstrommotor. Über das Getriebe 18 wirkt der Elektromotor mit einer Untersetzung von bevorzugt mehr als 50:1 auf das Verriegelungsteil 17 ein.

Über das Getriebe 18 ist das Verriegelungsteil 17 an der Küchenmaschine 1 um die Achse y drehbar festgelegt, dies weiter bei insgesamt frei auskragender Anordnung desselben.

Das insgesamt wellenartige Verriegelungsteil 17 ist weiter mit einer sich in dem dargestellten Ausführungsbeispiel etwa über bevorzugt 60 bis 70 % der axialen Länge des Verriegelungsteiles 17 erstreckenden Höhlung 20 versehen. Dies ist so gestaltet, dass sich jeweils zugeordnet den in axialer Richtung betrachteten Endbereich der Höhlung 20 mit Bezug auf einen Vertikalschnitt, d. h. mit Bezug auf einen senkrecht zur Drehachse y betrachteten Schnitt, ein kreisbogenartiger Übergreifabschnitt 21 einstellt. Dieser erstreckt sich bevorzugt konzentrisch zur Drehachse y, wobei der von dem Übergreifabschnitt 21 überdeckte Höhlungsabschnitt 22 hinsichtlich seiner Radialerstreckung als auch hinsichtlich seiner Erstreckung in Umfangsrichtung ausgelegt ist, zur formschlüssigen Aufnahme des Gefäßrandes 13 sowie des Deckelrandes 16 des auf dem Gefäß 6 aufgesetzten Deckels 10. Der hierbei mit Bezug auf einen Vertikalschnitt sich freikragend erstreckende Übergreifabschnitt 21 erstreckt sich bevorzugt kreisbogenartig, in dem dargestellten Ausführungsbeispiel über einen Bereich von etwa 80 bis 85°.

Die sich zufolge der vorbeschriebenen Ausgestaltung einstellenden Verriegelungsbereiche im Bereich der Übergreifabschnitte 21 sind in Erstreckungsrichtung der Drehachse y betrachtet um ein Maß zueinander beabstandet, welches in dem dargestellten Ausführungsbeispiel etwa einem Drittel des Deckeldurchmessers entspricht.

Weiter in Erstreckungsrichtung der Drehachse y betrachtet ist mittig zwischen den Übergreifabschnitten 21 ein Auflagebereich 23 ausgebildet. Dieser ist bevorzug kugelkopfartig oder ballenartig ausgeformt, insbesondere mit Bezug auf einen Vertikalschnitt gemäß Fig. 3 mit einer Auflagefläche, welche konzentrisch zur Drehachse y verläuft und somit weiter bevorzugt in entsprechender Zuordnungsstellung konzentrisch zu dem Verlauf des Gargefäßrandes 13 und/oder des Deckelrandes 16 in einem Vertikalschnitt.

In dem Auflagebereich 23 ist die Höhlung 20 so gebildet, dass in einer Deckelfreigabestellung gemäß Fig. 3 sich oberhalb des Auflagebereiches 23 ein freies vertikales Anheben bzw. Absenken des Gefäßes 6 sowie des Deckels 10 erreichbar ist. Zufolge der insgesamt kreisscheibenförmigen Ausgestaltung des Deckels 10 ist dieser ungerichtet dem Gefäßrand zuordbar.

Die Drehachse y des Verriegelungsteils 17 erstreckt sich bevorzugt durch das Zentrum des Auflagebereiches 23, um so bei einer Rotation des Verriegelungsteiles 17 die Gefäßposition konstant zu halten.

In der Zuordnungsstellung (vgl. Fig. 4) lagert auf der ballig bis kugelig ausgeführten Fläche des Auflagebereiches 23 der Gefäßrand 13, wobei das Gefäß 6 vertikal durch das Verriegelungsteil 17 gehalten ist, um etwaige Längentoleranzen zwischen Gefäß 6 und Gefäßaufnahme 5 gezielt auf der Gefäßunterseite ausgleichen zu können.

Zum Betrieb der Küchenmaschine 1 wird der Deckel 10 aufgelegt, dies unter unmittelbarer Abstützung des Deckelrandes 16 auf dem Gefäßrand 13, gegebenenfalls mittelbar unter Zwischenschaltung einer Dichtung.

Zufolge Rotation des Verriegelungsteiles über den Elektromotor 19 werden die in Axialrichtung zueinander distanzierten Übergreifabschnitte 21 über den Deckelrand 16 verlagert bis hin in eine Endstellung gemäß Fig. 5, in welcher der verriegelte Zustand des Deckels 10 erreicht ist. Bevorzugt wird hierbei keine axiale Verspannung vom Gefäß 6 und Deckel 10 erreicht. Vielmehr wird bevorzugt allein sichergestellt, dass das Gefäß 6 und der Deckel 10 im verriegelten Zustand auch durch hohe Kräfte nicht zu trennen sind. Die Dichtigkeit wird durch die erwähnte Radialdichtung sichergestellt.

Die Küchenmaschine 1 weist weiter einen in dem Maschinengehäuse aufgenommenen Mikrokontroller 25 auf. Dieser dient insbesondere der Ansteuerung des ersten Elektromotors 19 zur Drehverlagerung des Verriegelungsteiles 17 sowie weiter bevorzugt auch des zweiten Elektromotors 8 zum Antrieb des Rührwerks 7. Darüber hinaus ist der Mikrokontroller 25 bevorzugt ausgelegt zum Empfang und zur Auswertung von Signalen und/oder Daten, so weiter insbesondere im Zusammenhang mit einem Verriegelungsvorgang und/oder im Zusammenhang mit dem Rührwerkantrieb.

An einem Verriegelungsteil 17 ist bevorzugt ein durch einen Sensor 26 zu erfassender Abschnitt vorgesehen. In dem dargestellten Ausführungsbeispiel ist dieser zu erfassende Abschnitt ein, an dem dem freien Ende des Verriegelungsteiles 17 abgewandten Bereich in Axialrichtung vorstehender Nocken 27. Bei einer bevorzugten Anordnung von zwei Verriegelungsteilen 17 sind beide Verriegelungsteile 17 mit einem solchen Nocken 27 versehen, welchen insbesondere geräteseitig jeweils ein Sensor 26 zugeordnet ist.

Die Nocken-/Sensor-Anordnung ist weiter bevorzugt gehäuseinnenseitig in einer Geschütztlage vorgesehen, so weiter beispielsweise im Bereich des Getriebes 18.

Jeder Nocken 27 liegt hierbei im Zuge der Drehung des Verriegelungsteiles 17 aus einer Deckelfreigabestellung gemäß Figur 3 in Richtung auf eine Deckelverschlussstellung gemäß Figur 5 auf einer konzentrischen Kreislinie zur Drehachse y, wobei der jeweils zugeordnete Sensor 26 - bevorzugt in Form eines elektrischen Tasters - durch den Nocken 27 des Verriegelungsteiles 17 in der ordnungsgemäßen Verriegelungsposition gemäß Figur 5 beaufschlagt wird. Hierdurch ist die ordnungsgemäße Verriegelungsstellung des Deckels 10 sensorisch erfassbar.

Bei bevorzugt eingeschalteter Küchenmaschine 1, in welchem Zustand insbesondere der Mikrokontroller 25 sowie die Regler 3 und/oder Schalter 24 und das Display 4 aktiviert sind, führt eine durch den Benutzer herbeigeführte Drehzahlvorwahl für das Rührwerk 7 (beispielsweise über die Taster 24) zunächst zu einer Verriegelung des Deckels 10.

Diese Verriegelung erfolgt bevorzugt selbsttätig durch die Küchenmaschine 1, entsprechend ohne weiteren Eingriff des Benutzers. Dieser hat zuvor lediglich den Deckel 10 auf das Rührgefäß 6 ordnungsgemäß aufzulegen.

Über den Mikrokontroller 25 ist dieser Vorgang koordiniert. Dieser erfasst den eingegebenen Drehzahl-Befehl, welcher darüber hinaus auch aus einer maschinenseitig hinterlegten Rezeptsteuerung gegeben sein kann, und steuert den beziehungsweise die ersten Elektromotoren 19 zur Drehverlagerung der Verriegelungsteile 17 an.

Durch die bevorzugt hohe Untersetzung über das jeweilige Getriebe 18 (es kann diesbezüglich auch nur ein gemeinsames Getriebe mit nur einem Elektromotor 19 für beide Verriegelungsteile 17 vorgesehen sein) kann auch mit einem bevorzugt leistungsmäßig kleinen Elektromotor ein hohes Verriegelungsmoment erreicht werden. Da der Elektromotor zur Verlagerung des Verriegelungsteiles 17 nur kurzzeitig betrieben wird, ist hierbei ein Betrieb im Überlastbereich vorgesehen und möglich.

Wie vorbeschrieben, wird hierbei das Verriegelungsteil 17 in die in Fig. 5 dargestellte Verriegelungsstellung schwenkverlagert, wobei diese Verriegelungs-Endstellung jeweils durch den den zugeordneten Sensor 26 beaufschlagenden Nocken 27 bestätigt wird.

Bei Anordnung von jeweils einem Sensor 26 an jedem Verriegelungsteil 17 müssen in bevorzugter Ausgestaltung beide Sensoren 26 ein entsprechendes Verriegelungs-Signal liefern.

Das Sensorsignal wird vom Mikrokontroller 25 erfasst, welcher daraufhin den zweiten Elektromotor 8 zum Antrieb des Rührwerks 7 mit der vorgegebenen Drehzahl freigibt.

Das Verriegelungs-Signal des oder der Sensoren 26 ist in einem vorgegebenen Zeitraum vom Mikrokontroller 25 zu erfassen. Der Zeitraum beginnt bevorzugt mit Starten des Vorganges, weiter bevorzugt mit Eingabe beziehungsweise Bestätigung der vorgewählten Drehzahl durch den Benutzer. In weiterer Ausgestaltung beginnt der vorgegebene Zeitraum mit Ansteuerung des das Verriegelungsteil 17 verlagernden Elektromotors 19 durch den Mikrokontroller 25.

So ist bevorzugt innerhalb von einer Sekunde, weiter bevorzugt von weniger als einer Sekunde das Sensorsignal durch den Mikrokontroller 25 zu erfassen. Registriert der Mikrokontroller 25 innerhalb dieses vorgegebenen Zeitraumes das entsprechende Signal, so gibt dieser den Elektromotor 8 zur Ansteuerung des Rührwerkes 7 frei.

Erfasst der Mikrokontroller 25 nach Ablauf der vorgegebenen Zeit kein Signal des Sensors 26 beziehungsweise kein Signal beider Sensoren 26, so wertet der Mikrokontroller 25 dies als nicht ordnungsgemäße Verriegelung. Es wird auf dem Display 4 eine Fehlermeldung angezeigt, die beispielsweise den Benutzer veranlassen soll, die Deckellage auf dem Rührgefäß 6 zu überprüfen.

Eine solche Fehlermeldung beziehungsweise das Ausbleiben des Sensorsignals kann alternativ oder ergänzend zu einer selbsttätigen Drehrückverlagerung des oder der Verriegelungsteile 17 in die Deckelfreigabestellung gemäß Fig. 3 führen.

Jedenfalls wird bei ausbleibendem Sensorsignal der Elektromotor 8 für das Rührwerk 7 nicht freigegeben.

In weiterer, nicht dargestellter Ausgestaltung wird auch das Nichtvorhandensein des Deckels 10 erfasst, dies weiter beispielsweise zufolge Anordnung eines weiteren Sensors, dessen Signal gegebenenfalls zusätzlich zu den Signalen der Sensoren 26 zur Freigabe des Rührwerk-Motors innerhalb der vorgegebenen Zeit erfasst sein muss. Auch kann ein solches Fehlen des Deckels 10 durch die zugleich die Verriegelungsteile 17 abtastenden Sensoren 26 erfasst werden, so weiter beispielsweise zufolge entsprechenden Überdrehens der Verriegelungsteile 17 über die übliche Verriegelungsstellung hinaus. Hierbei erweist es sich weiter von Vorteil, wenn der Deckel 10 beziehungsweise der Deckelabschnitt, wie beispielsweise der Deckelrand 16 als Dreh-Anschlagbegrenzung für das Verriegelungsteil 17 dient.

Beispielsweise eine Deckelschiefstellung kann dazu führen, dass zumindest ein Verriegelungsteil 17 nicht die ordnungsgemäße Verriegelungsposition gemäß Fig. 5 erreicht. Eine solche Situation ist beispielhaft in Fig. 6 dargestellt. Da das Verriegelungsteil 17 in einem solchen Fall nicht in dem vorgegebenen Zeitraum die Verschluss-Endstellung erreichen kann, löst der Mikrokontroller 25 bevorzugt die Rückdrehverlagerung des Verriegelungsteiles 17 aus, gibt darüber hinaus bevorzugt den Elektromotor 8 für das Rührwerk 7 nicht frei.

Weiter erfasst der Mikrokontroller 25 bevorzugt auch den Motorstrom des ersten Elektromotors 19 zur Verlagerung des Verriegelungsteiles 17. Die erfassten Messwerte werden bevorzugt in dem Mikrokontroller 25 ausgewertet. Hierdurch wird in bevorzugter Ausgestaltung eine Momentenbegrenzung erreicht. Darüber hinaus ist bevorzugt auch hierdurch ein Abschalten des Elektromotors 19 bei einer Überlast ermöglicht, so weiter beispielsweise bei einer Situation gemäß Fig. 6, in welcher die Verriegelung klemmt. Wird Überlast durch den Mikrokontroller 25 detektiert, so wird bevorzugt selbsttätig die Drehrichtung des Elektromotors 19 umgekehrt, zur Verlagerung des Verriegelungsteiles 17 zurück in die Deckel-Freigabestellung gemäß Fig. 3.

Bei registriertem und entsprechend ordnungsgemäßem Verriegeln des Deckels 10 dreht der Elektromotor 8 das Rührwerk 7 bevorzugt mit der vorgegebenen Drehzahl. Mit Ausschalten des Rührwerks 7 beziehungsweise des diesen antreibenden Elektromotors 8, welches Ausschalten auch zeitgesteuert und/oder rezeptgesteuert erfolgen kann, wird die Verriegelung des Deckels 10 bevorzugt selbsttätig durch die Küchenmaschine 1 beziehungsweise gesteuert über den Mikrokontroller 25 freigegeben. Entsprechend wird bevorzugt der das Verriegelungsteil 17 drehverlagernde Elektromotor 19 mit umgekehrter Drehrichtung aktiviert, zur Verlagerung des Verriegelungsteiles 17 aus der Deckelverriegelungsstellung in die Deckelfreigabestellung gemäß Fig. 3.

Weiter bevorzugt erfolgt die Öffnung beziehungsweise die Rückverlagerung des oder der Verriegelungsteile 17 erst nach Ablauf einer vorbestimmten Zeit, beginnend mit dem Stillstand des Rührwerks 7. Der Stillstand des Rührwerks 7 kann über einen weiteren Sensor erfasst werden, welches Sensorsignal von dem Mikrokontroller 25 ausgewertet wird. In bevorzugter Ausgestaltung sind diesbezüglich Werte in einem bevorzugt nicht flüchtigen Speicher hinterlegt, so insbesondere Zeitwerte, innerhalb welcher das Rührwerk 7 nach Abschalten des diesen antreibenden Elektromotors 8 bei bestimmten Drehzahlen zum Stillstand kommt. Auch kann diesbezüglich nur ein Wert hinterlegt werden, der alle möglichen Drehzahlbereiche des Rührwerks 7 umfasst.

So gibt der Mikrokontroller 25 die Verriegelung nach Ablauf von beispielsweise einer Sekunde, weiter beispielsweise zwei Sekunden nach Ausschalten des Elektromotors 8 frei.

Weiter bevorzugt gibt der Mikrokontroller 25 die Verriegelung erst nach einer weiteren vorbestimmten Zeit nach Stillstand des Rührwerkes 7 frei. Während des Rührbetriebs kann sich insbesondere bei einer in dem Rührgefäß 6 befindlichen Flüssigkeit eine Flüssigkeitssäule aufbauen, die unterseitig gegen den Deckel 10 wirkt. Mit Stillstand des Rührwerkes 7 baut sich diese Flüssigkeitssäule in Abhängigkeit von der gewählten Drehzahl gegebenenfalls erst verzögert ab, so dass eine verfrühte Freigabe des Deckels 10 quasi zu einem Absprengen und darüber hinaus zu einem Flüssigkeitsaustritt führen kann. Um diesem entgegenzuwirken, ist die Freigabe der Verriegelung, d.h. die Verlagerung des oder der Verriegelungsteile 17 in die Deckel-Freigabestellung gemäß Fig. 3 weiter zeitverzögert. In dieser Zeit ist eine gegebenenfalls vorhandene Flüssigkeitssäule zumindest so weit abgebaut, dass keine Gefahr besteht, dass Flüssigkeit ausspritzt.

Diese vorbestimmte Zeit nach Stillstand des Rührwerks 7 ist weiter bevorzugt drehzahlabhängig, entsprechend abhängig von der vorgewählten Drehzahleinstellung. Je höher die Drehzahl des Rührwerks 7 gewählt ist, desto länger ist der Verzögerungszeitraum zwischen Stillstand des Rührwerks 7 und Verriegelungsfreigabe.

Auch diesbezüglich sind bevorzugt entsprechende Zeitwerte in Abhängigkeit von den Drehzahlen beziehungsweise Drehzahlstufen hinterlegt. Weiter bevorzugt ist die Verzögerungszeit zwischen Stillstand des Rührwerks 7 und Verriegelungsfreigabe bei Drehzahlen des Rührwerks 7 bis hin zu 1.000 U/min gleich Null bis hin zu beispielsweise einer Sekunde, da bei derart relativ niedrigen Umdrehungen die Gefahr einer Flüssigkeitssäule nicht besteht beziehungsweise eine solche Säule mit Ausschalten des Rührwerks 7 annähernd unmittelbar abfällt. Bei höheren Drehzahlen von mehreren 1.000 U/min, beispielsweise 8.000 bis 10.000 U/min, ist bevorzugt eine Verzögerung zwischen Stillstand des Rührwerks 7 und Verriegelungsfreigabe von mehreren Sekunden gegeben, beispielsweise zwei bis fünf Sekunden.

**Bezugszeichenliste:**

| | | | |
|---|---|---|---|
| 1 | Küchenmaschine | 25 | Mikrokontroller |
| 2 | Bedienfeld | 26 | Sensor |
| 3 | Regler | 27 | Nocken |
| 4 | Display | | |
| 5 | Gefäßaufnahme | x | Achse |
| 6 | Rührgefäß | y | Drehachse |
| 7 | Rührwerk | | |
| 8 | Elektromotor | | |
| 9 | Netzanschlusskabel | | |
| 10 | Deckel | | |
| 11 | Einfüllöffnung | | |
| 12 | Gefäßwandung | | |
| 13 | Gefäßrand | | |
| 14 | Wölbungsfläche | | |
| 15 | Kragen | | |
| 16 | Deckelrand | | |
| 17 | Verriegelungsteil | | |
| 18 | Untersetzungsgetriebe | | |
| 19 | Elektromotor | | |
| 20 | Höhlung | | |
| 21 | Übergreifabschnitt | | |
| 22 | Höhlungsabschnitt | | |
| 23 | Auflagebereich | | |
| 24 | Taster | | |

## Patentansprüche

1. Elektrisch betriebene Küchenmaschine (1) mit einem Rührgefäß (6), einem elektromotorisch betriebenen Rührwerk (7) in dem Rührgefäß (6) und einem Deckel (10) für das Rührgefäß (6), wobei der Deckel (10) aus einem Verriegelungszustand Offen heraus bevorzugt elektromotorisch verriegelbar ist, **dadurch gekennzeichnet, dass** die Küchenmaschine (1) so eingerichtet ist, dass die Verriegelung in einem bestimmten Zeitraum erfolgt sein muss, wozu Sensoren (26) vorgesehen sind, welche die erfolgte Verriegelung erfassen, und anderenfalls eine Fehlermeldung erfolgt und/oder eine Zurücksetzung der Verriegelung in den Zustand Offen.

2. Küchenmaschine nach Anspruch 1, **dadurch gekennzeichnet, dass** die vorbestimmte Verrieglungszeit kleiner als 2 Sekunden ist, bis hin zu kleiner 0,5 Sekunden.

3. Elektrisch betriebene Küchenmaschine (1)nach einem der vorhergehenden Ansprüche, **gekennzeichnet durch** eine Kombination zumindest folgender Merkmale:
3.1 Der die Verriegelung erbringende Elektromotor (19) weist eine Abgabeleistung von 1 bis 10 Watt auf;
3.2 der Elektromotor (19) wirkt mittels eines Untersetzungsgetriebes (18) mit einer Untersetzung größer 50:1 auf ein Verriegelungsteil (17) ein;
3.3 der Elektromotor (19) ist ein Gleichstromotor.

4. Küchenmaschine nach einem der vorhergehenden Ansprüche, **dadurch gekennzeichnet, dass** der Verriegelungsbetrieb zumindest teilweise im Überlastbetrieb erfolgt.

5. Küchenmaschine nach einem der vorhergehenden Ansprüche, **dadurch gekennzeichnet, dass** der Motorstrom des Elektromotors (19) auswertbar ist.

6. Küchenmaschine nach einem der vorhergehenden Ansprüche, **dadurch gekennzeichnet, dass** die Drehrichtung des Elektromotors (19) umschaltbar ist.

7. Küchenmaschine nach einem der Ansprüche 5 oder 6, **dadurch gekennzeichnet, dass** mittels der Auswertung des Motorstromes eine Momentenbegrenzung durchführbar ist.

8. Küchenmaschine nach einem der Ansprüche 5 bis 7, **dadurch gekennzeichnet, dass** mittels der Auswertung des Motorstromes ein Abschalten bei Überlast ermöglicht ist.

9. Küchenmaschine nach einem der Ansprüche 5 bis 8, **dadurch gekennzeichnet, dass** mittels der Auswertung des Motorstromes eine Drehrichtungsumkehr auslösbar ist.

10. Elektrisch betriebene Küchenmaschine (1) nach einem der vorhergehenden Ansprüche, **dadurch gekennzeichnet, dass** der Deckel (10) elektromotorisch verriegelbar ist, wobei weiter ein erster Elektromotor (19) zur Verriegelung des Deckels (10) vorgesehen ist und ein zweiter Elektromotor (8) zum Antrieb des Rührwerks (7), und die Küchenmaschine (1) so eingerichtet ist, dass bei Vorwahl einer Drehzahl des Rührwerks (7) zunächst und selbsttätig der erste Elektromotor (19) die Deckelverriegelung vornimmt und zeitlich danach der zweite Elektromotor (8) zum Antreiben des Rührwerks (7) freigegeben ist.

11. Küchenmaschine nach Anspruch 10, **dadurch gekennzeichnet, dass** nach Ablauf der Zeit, für welche eine bestimmte Drehzahl vorgewählt war und das Rührwerk (7) entsprechend angetrieben wurde, selbsttätig eine Öffnung der Deckelverriegelung erfolgt, wobei die Öffnung nach Ablauf einer vorbestimmten Zeit, beginnend mit dem Stillstand des Rührwerks (7), erfolgt.

12. Küchenmaschine nach einem der Ansprüche 10 oder 11, **dadurch gekennzeichnet, dass** die vorbestimmte Zeit in Abhängigkeit zu der vorgewählten Drehzahl unterschiedlich ist.

## Claims

1. An electrically operated kitchen appliance (1), comprising a mixing container (6), an electric-motor operated mixer (7) in the mixing container (6), and a lid (10) for the mixing container (6), wherein the lid (10) can be locked, preferably in an electric-motor operated manner, from a locking state open, **characterized in that** the kitchen appliance (1) is designed in such a way that the locking must have taken place within a certain period of time, for the purpose of which provision is made for sensors (26), which detect that the locking took place, and, in the alternative, an error message is output and/or the locking is set back into the state open.

2. The kitchen appliance according to claim 1, **characterized in that** the predetermined locking time is less than 2 seconds, up to less than 0.5 seconds.

3. Kitchen appliance (1) according to one of the preceding claims, **characterized by** a combination of at least the following features:
1.1 the electric motor (19) producing the locking has an output power of 1 to 10 watts;
1.2 the electric motor (19) acts on a locking part (17) by means of a reduction gear train (18) having a reduction greater than 50:1;
1.3 the electric motor (19) is a direct-current motor.

4. The kitchen appliance according to one of the preceding claims, **characterized in that** the locking operation takes place at least partially in overload operation.

5. The kitchen appliance according to one of the preceding claims, **characterized in that** the motor current of the electric motor (19) can be evaluated.

6. The kitchen appliance according to one of the preceding claims, **characterized in that** the direction of rotation of the electric motor (19) can be reversed.

7. The kitchen appliance according to one of the claims 5 or 6, **characterized in that** a torque limitation can be carried out by monitoring the motor current.

8. The kitchen appliance according to one of the claims 5 to 7, **characterized in that** a turn-off is made possible in response to overload by monitoring the motor current.

9. The kitchen appliance according to one of the claims 5 to 8, **characterized in that** a reversal of the direction of rotation can be triggered by monitoring the motor current.

10. An electrically operated kitchen appliance (1) according to one of the preceding claims, **characterized in that** the lid (10) can be locked by an electric motor, wherein a first electric motor (19) is furthermore provided for locking the lid (10), and a second electric motor (8) is provided for driving the mixer (7), and the kitchen appliance (1) is designed in such a way that, when a rotational speed of the mixer (7) is preselected, the first electric motor (19) first performs the lid locking independently and the second electric motor (8) is released to drive the mixer (7) thereafter.

11. The kitchen appliance according to claim 10, **characterized in that**, after the time, for which a certain rotational speed had been preselected, has lapsed and the mixer (7) was driven accordingly, an opening of the lid locking takes place independently, wherein the opening takes place after a predetermined time has lapsed, starting with the standstill of the mixer (7).

12. The kitchen appliance according to one of claims 10 or 11, **characterized in that** the predetermined time is different depending on the preselected rotational speed.

## Revendications

1. Robot de cuisine électrique (1), comprenant une cuve de brassage (6), un agitateur (7) dans la cuve de brassage (6) lequel est entraîné par moteur électrique et un couvercle (10) pour la cuve de brassage (6), dans lequel le couvercle (10) est susceptible d'être verrouillé à partir d'un état de verrouillage ouvert de préférence par moteur électrique, **caractérisé en ce que** le robot de cuisine (1) est agencé de manière à ce que le verrouillage doive se produire dans un certain laps de temps, ce pour quoi des capteurs (26) sont prévus lesquels déterminent que le verrouillage s'est produit, et à défaut s'opère une signalisation de défaut et/ou un retour du verrouillage à l'état ouvert.

2. Robot de cuisine selon la revendication 1, **caractérisé en ce que** le laps de temps prédéterminé est inférieur à 2 secondes et jusqu'à inférieur à 0,5 seconde.

3. Robot de cuisine électrique (1) selon l'une des revendications précédentes, **caractérisé par** une combinaison d'au moins les caractéristiques suivantes :
3.1 le moteur électrique (19) opérant le verrouillage a une puissance de sortie de 1 à 10 Watts ;
3.2 le moteur électrique (19) agit sur un élément de verrouillage (17) par le biais d'un réducteur de vitesse (18) avec un rapport de réduction supérieur à 50:1 ;
3.3 le moteur électrique (19) est un moteur à courant continu.

4. Robot de cuisine selon l'une des revendications précédentes, **caractérisé en ce que** l'opération de verrouillage a lieu au moins en partie sous fonctionnement en surcharge.

5. Robot de cuisine selon l'une des revendications précédentes, **caractérisé en ce que** le courant moteur du moteur électrique (19) peut être évalué.

6. Robot de cuisine selon l'une des revendications précédentes, **caractérisé en ce que** le sens de rotation du moteur électrique (19) est inversable.

7. Robot de cuisine selon l'une des revendications 5 ou 6, **caractérisé en ce qu'**une limitation de couple peut être appliquée au moyen de l'évaluation du courant moteur.

8. Robot de cuisine selon l'une des revendications 5 à 7, **caractérisé en ce qu'**une mise hors tension en cas de surcharge est permise au moyen de l'évaluation du courant moteur.

9. Robot de cuisine selon l'une des revendications 5 à 8, **caractérisé en ce qu'**une inversion de sens de rotation peut être déclenchée au moyen de l'évaluation du courant moteur.

10. Robot de cuisine électrique (1) selon l'une des revendications précédentes, **caractérisé en ce que** le couvercle (10) est verrouillable par moteur électrique, dans lequel en outre un premier moteur électrique (19) est prévu pour le verrouillage du couvercle (10) et un deuxième moteur électrique (8) pour l'entrainement de l'agitateur (7), et **en ce que** le robot de cuisine (1) est agencé pour qu'en cas de présélection d'une vitesse de rotation de l'agitateur (7), le premier moteur électrique (19) procède d'abord automatiquement au verrouillage du couvercle et ensuite le deuxième moteur électrique (8) est démarré pour entrainer l'agitateur (7).

11. Robot de cuisine selon la revendication 10, **caractérisé en ce qu'**après écoulement du temps pour lequel une certaine vitesse de rotation avait été présélectionnée et l'agitateur (7) a été entrainé en correspondance, il se produit automatiquement un déverrouillage du couvercle, dans lequel le déverrouillage se produit après l'écoulement d'un temps prédéterminé qui débute avec l'arrêt de l'agitateur (7).

12. Robot de cuisine selon l'une des revendications 10 ou 11, **caractérisé en ce que** le temps prédéterminé varie en fonction de la vitesse de rotation présélectionnée.
